# EUROPEAN PATENT SPECIFICATION

(11) **EP 1 206 503 B1**
(45) Date of publication and mention of the grant of the patent: **28.07.2004**
(21) Application number: 00951005.8
(22) Date of filing: 07.08.2000
(51) Int. Cl.: C09K 3/14, B24D 3/14

(54) **SOL-GEL ALUMINA ABRASIVE GRAIN**
SOL-GEL ALUMINIUMOXID-SCHLEIFMITTEL
GRENAILLE ABRASIVE A BASE D'ALUMINE SOL-GEL

(30) Priority: 20.08.1999 US 378419; 12.06.2000 US 592157
(43) Date of publication of application: 22.05.2002
(73) Proprietor: Saint-Gobain Ceramics & Plastics Inc. Saint Gobain Corporation, Worcester, MA 01615-0137 (US)
(72) Inventor: SUNG, Jason, Northborough, MA 01615-0138 (US); BAUER, Ralph, Niagara Falls, Ontario L2H 4R6 (CA)
(74) Representative: Leidescher, Thomas, Dr.
(86) International application number: PCT/US2000/021550
(87) International publication number: WO 2001/014495

(56) References cited:
- EP-A- 0 417 729
- EP-A- 0 503 598
- WO-A-94/02560
- US-A- 4 623 364
- US-A- 5 352 254

## Description

### Background of the Invention

The present invention concerns vitreous bonded abrasive products comprising sol-gel alumina abrasive grits.

Sol-gel alumina abrasive grits, particularly those that have an alumina crystal size that is essentially sub-micron are extremely effective in many applications especially when incorporated in vitreous bonded abrasive wheels. In the production of such wheels, the grits are mixed with a vitreous bond material and various organic temporary binders, burnout materials and/or lubricants and the mixture is placed in a mold. The temporary binders and/or lubricants are needed to facilitate the mixing and molding operation and the burnout materials are needed to ensure that the wheel has a desired degree of porosity when completed. The burnout material is of course intended to be completely removed during the firing of the wheel.

During the production process the temperature of the mixture is raised to the point at which the bond components mix, (if a raw bond is used), and flow until the abrasive grits are coated with the vitreous bond material and the molten bond forms a bond post connecting the points on adjacent grits that contact or are in close proximity. After allowing the maturing of the bond post structures, the temperature is allowed to ramp down until the wheel can be removed from the mold.

The temperature at which the bond is fired is rather critical because it is found that sol-gel alumina abrasive grits with alumina crystal sizes of the order of one micron or less are deteriorated by exposure to temperatures higher than about 1150°C for the prolonged periods required for formation of a vitreous bonded wheel. This is because the very fine crystal structure, which is closely connected to the excellent grinding performance, begins to be coarsened. For this reason it is strongly recommended that, when using sol-gel alumina abrasive grits, particularly with seeded sol-gel alumina abrasive grits, a bond should be used that is matured at a temperature below 1154°C and preferably below about 1000°C.

In addition, the higher the temperature at which the bond is formed, the greater the extent of the penetration of the abrasive grits by silica from the vitreous bond system. This interaction, while not a serious problem with low temperature-matured bonds, is something that needs to be considered in developing optimum performance.

It is found however that, using such low temperature-matured vitreous bond materials, the organic materials that are supposed to be completely burned out in fact leave a residue of carbon. This residue collects in surface pores on the grits, which are typically white or colorless, such that the wheel produced may have black spots.

A process has now been developed that permits the use of low temperature vitreous bonds with sol-gel alumina abrasive grits without the development of the unsightly blemishes, or black spots, on the surface of the vitreous bonded product.

The process has also been found to have a beneficial effect on reducing the interaction between the bond and the abrasive grits thereby allowing the development of stronger bonds.

### Description of the Invention

The present invention provides a vitreous bonded abrasive product comprising coated sol-gel alumina abrasive grit in which the alumina grits are coated with a ceramic oxide and comprise crystals of alpha alumina that are two microns or smaller in size.

By the term "coated" is meant that the alpha alumina abrasive grits have been treated with a solution of a precursor of the ceramic oxide and then calcined at a temperature sufficient to drive off the solvent in which the precursor was dissolved and to form the ceramic oxide from the precursor. In practice the most usual effect is for the ceramic oxide to diffuse into the surface layer of the grit and reduce the porosity of the abrasive grit. Within the present invention this surface area reduction, (as measured by the BET method), is found to be from about 10% to 40%. In some cases there is evidence that the ceramic oxide reacts, at least in part, with the alumina to form an aluminate, (which would include spinels in the case of certain oxides such as magnesium oxide). For the purposes of this invention such aluminates, where formed, are considered to be ceramic oxides, except for the purpose of calculating the amount of the ceramic oxide added when the ceramic oxide in the highest oxidation state is used as the calculation basis.

The invention therefore also provides a process for the production of sol-gel alumina abrasive grit which comprises forming alpha alumina abrasive grits with a crystal size of about 2 microns or less and then treating the grits with a solution or dispersion of a ceramic oxide precursor and subsequently heating the treated grits at a temperature sufficient to drive off the solvent and convert the precursor to a ceramic oxide.

The temperature of the treatment is preferably from 900 to 1300°C and more preferably from 1000 to 1200°C though higher or lower temperatures can be used provided that the alumina crystal size is not materially altered and providing the ceramic oxide is formed. It is also highly preferred that the temperature should be high enough to result in the BET surface area of the treated grits being reduced as indicated above.

The ceramic oxide precursor is preferably a salt that is soluble in water and which, upon heating, decomposes to the oxide and gases with no residual material The salt can be for example a nitrate or an organic acid salt. The ceramic oxide itself is understood to refer to a metal oxide stable at temperatures over 1500°C selected from magnesium oxide, titanium dioxide, cobalt oxide, nickel oxide and chromium oxide. As indicated above the ceramic oxide may be in the form of the corresponding aluminates where these are formed by reaction of the oxide with the alumina. The amount of the ceramic oxide added is sufficient to provide up to one percent by weight, (measured as the oxide), of the total alumina grit weight.

The ceramic oxide may be added, as indicated above, as an aqueous solution of a soluble salt that yields the oxide when heated to temperatures to which the treated grain is exposed during processing. Alternatively and often preferably the ceramic oxide salt is dissolved or dispersed in a dispersion or sol of an alpha alumina precursor such as for example a boehmite sol or an aqueous dispersion of alumina trihydrate. This mode of addition can also place a layer of an alpha alumina or an alpha alumina precursor such as gamma alumina around the abrasive grits. More usually however the bulk of the alumina reacts to form an aluminate. This coating or layer also adds protection for the grits against attack from a vitreous bond when the grits are used to make vitreous bonded materials.

The sol-gel alumina from which the abrasive grits are made is preferably a seeded sol-gel alumina with a sub-micron crystal size. In the context of this invention, the crystal size is measured by the "intercept method" in which an SEM micrograph is analyzed by tracing a plurality of diagonal lines across the micrograph and dividing the total length of the lines by the number of crystals crossed by the lines and then multiplying the value obtained by a correction factor of 1.5.

### Drawings

Figure 1 is a bar graph showing the BET surface areas for coated and uncoated grains at three different grit sizes.
Figure 2 is a series of photographs showing the prevalence of black spots in vitreous bonded materials made using uncoated grain.

### Description of Preferred Embodiments

The invention is now illustrated with reference to the following non-limiting Example.

### Example 1

In this Example we describe the production of a vitreous bonded abrasive article comprising seeded sol-gel alumina abrasive grits, a vitreous bond that is matured at a temperature of 950°C and organic burnout materials comprising pore-formers, lubricants and temporary binders. Two sets of sample were prepared with the identical formulations except that the sample made according to the invention comprising abrasive grit that had been soaked in a solution of cobalt nitrate and then calcined to give a coated abrasive grit according to the invention.

### Preparation of Coated Abrasive Grit

Abrasive grain which is sold by Saint-Gobain Industrial Ceramics, Inc. under the trade name "Cerpass-XTL" was used as the sol-gel alumina abrasive grain in all the following Examples. This is a seeded sol-gel alumina comprising at least 98% of alpha alumina and having a Vickers hardness of about 21Gpa. To secure a sample of a coated grain according to the invention, a 1000g sample of the grain in a 54 grit size was placed in a Hobart mixer and a solution of cobalt nitrate was added. The amount of the solution was calculated to give a cobalt aluminate content in the final grain of 0.25%, measured as cobalt oxide, and to this end the calculated amount of cobalt nitrate hexahydrate that would need to be added was 4.1g. This was added in the form of 10 g of an aqueous solution which had a pH of about 2.0. As will be obvious the amount of the coating ceramic oxide precursor will depend on the grit size since the smaller grits present a larger surface area to be coated. It is calculated for example that, to achieve the same level of coating on the grain surface for a 36 grit grain, the amount of the ceramic oxide precursor can be decreased by 15% but it should be increased by 10% if the grit size is 80.

The mixing conditions are adjusted to give a uniform coating and this can be determined usually by visual inspection where the precursor solution has an intense color. After uniform coating has been achieved the coated grain was then dried in a convection oven at 100°C over 18 hours. If the mixer is fitted with a dryer the drying can be carried out in the mixer of course. With cobalt nitrate, the melting point is only 55°C and this is in fact desirable since it aids in ensuring uniform distribution over the grain surface. Completion of the drying was indicated by a flowable grain with a uniform color. Overdrying is not recommended since this can lead to flaking or powdering of the coating. The objective is not to lose the water of hydration at this stage since this could lead to further degradation of the nitrate and the drying oven is not usually adapted for removal of NOx fumes.

The dried coated grain is then placed in a kiln and fired. The kiln used was a rotary kiln with the hot zone at 1100°C and using a 20 minute residence time. Alternatively a static firing kiln can be used in which the grains are ramped up to a temperature of 1050-1150°C and held there for about 15 minutes before cooling down to room temperature. The grain initially turned black indicating the formation of cobalt oxide (between about 200 to 900°C) which changed to a blue color indicating the formation of cobalt aluminate above 900°C.

### Testing of the Coated Grain

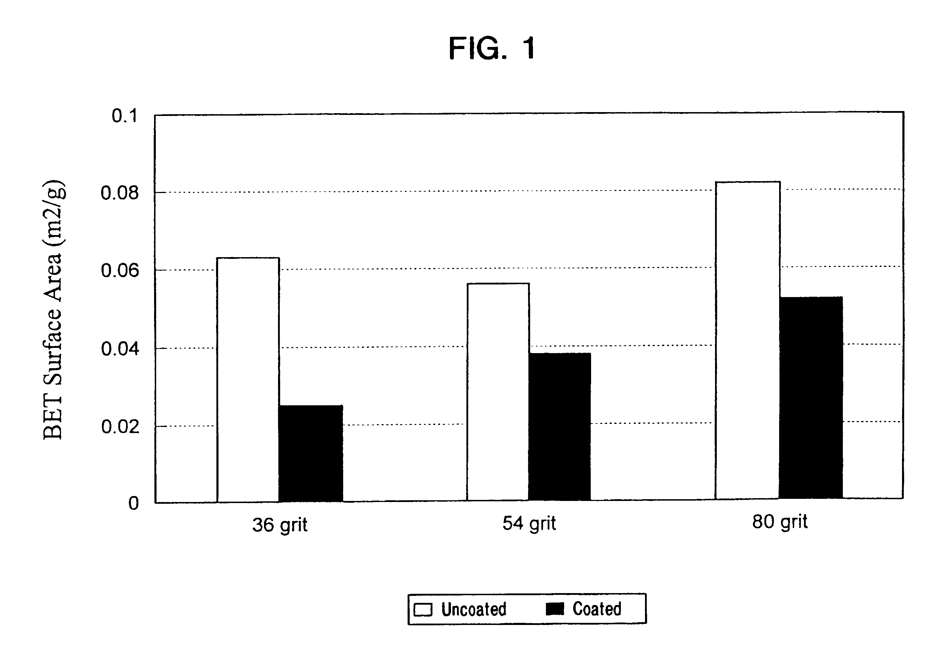

The BET surface areas of coated grains, prepared as indicated above, in grit sizes of 36, 54 and 80 were then compared with identical untreated grain. At all grit sizes there was a significant reduction of up to 40% in the measured surface area as a result of the coating. The results are shown in Figure 1.

Comparison testing of the coated and uncoated grains indicated that the coating had no adverse effect on hardness, electrostatic projectability, or element-diffusion-profile across the grain/bond interface in vitrified bonded products. The crystal size of the alumina showed a minor increase of from 0.01 to 0.02 micrometer.

### Preparation of Vitreous Bonded Samples

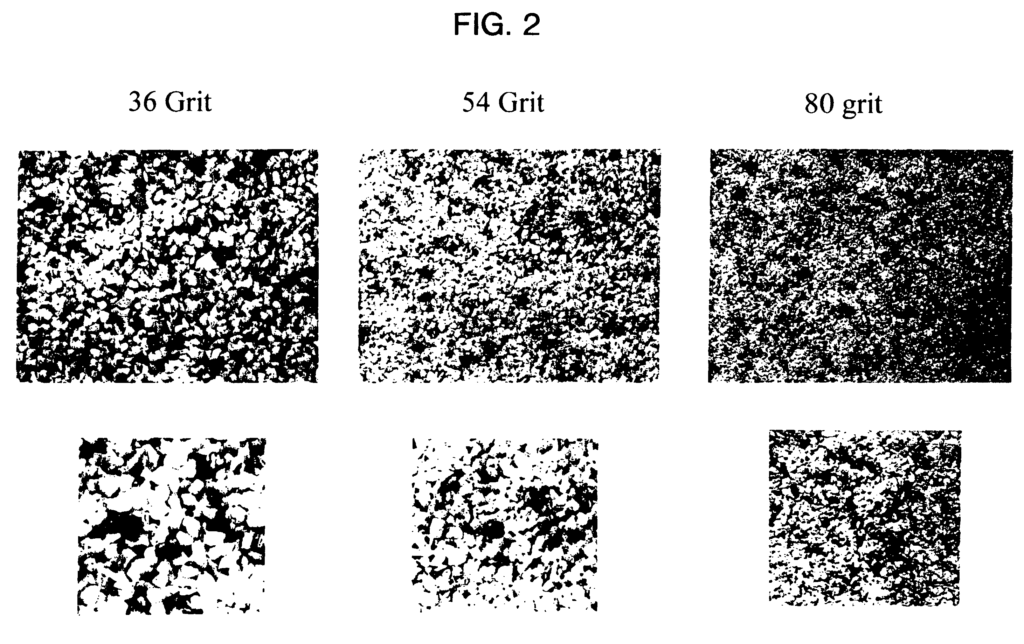

The coated grain prepared as above was then compared against an uncoated grain that was otherwise identical in the formation of vitreous bonded test bars. The bond used was a low temperature bond that was matured at a temperature of 900°C for 10 hours. The uncoated grain showed significant numbers of black spots. These are shown clearly in Figure 2. The coated showed no black spots. This correlation with the reduction in surface area is strong support for the conclusion that the black spots are the result of the collection of incompletely combusted organic material in surface pores of a grain.

The test bars were then subjected to tests to determine the MOR strength and the sand blast penetration for bars made using coated and uncoated grains. No significant difference was observed. If anything the bars made with coated grain were slightly better.

The coated grain was then formed into a test bar with an equal volume of white fused aluminum oxide using a transparent vitreous bond matured at 950°C over a ten hour period. No "bleeding" of the color of the coated grain into the fused alumina grain was detected showing that the coating was fully integrated into the surface of the grain.

### Example 2

In this Example the same procedures were adopted as set forth in Example 1 with the difference that the cobalt salt was added to a boehmite sol and the amount added was sufficient to result, after firing at the temperatures used in Example 1, in the deposition on the abrasive grits of 1.00% by weight of cobalt, measured as cobalt oxide, in the form of a layer comprising cobalt aluminate and an alpha alumina precursor. The abrasive grits this produced were very resistant to color changes even after the prolonged firing schedules required to form a vitreous bonded abrasive product. Measurement of the surface area of the grits before and after the formation of the coating indicated a reduction of the surface area by well over 10%.

## Claims

1. Method for producing a vitreous bonded abrasive product, comprising sol-gel alpha-alumina abrasive grit coated with an ceramic oxide, said method comprising the steps of:
(a) forming sol-gel alumina abrasive grit comprising crystals of alpha alumina that are two micrometers or smaller,
(b) treating the abrasive grits with a solution or dispersion of a ceramic oxide precursor, wherein the ceramic oxide precursor is present in the solution or dispersion in such an amount that the coated sol-gel alpha-alumina abrasive grit is coated with up to one percent by weight, based on the weight of the abrasive grit, of a ceramic oxide in heating step (c), and wherein the ceramic oxide is a metal oxide that is stable at temperatures over 1500 °C and is selected from the group consisting of magnesium oxide, titanium oxide, cobalt oxide, nickel oxide, chromium oxide, the corresponding aluminates of these oxides, mixtures of one or more. of such oxides and aluminates with an alpha alumina precursor, and mixtures thereof,
(c) heating the treated grits at a temperature sufficient to drive off the solvent and to convert the ceramic oxide precursor into a ceramic oxide, thereby forming sol-gel alpha alumina abrasive grits coated with the ceramic oxide and having a BET surface area that is reduced by 10% to 40% by the ceramic oxide coating, and
(d) forming a vitreous bonded abrasive article using the coated sol-gel alumina abrasive grit and a low temperature-matured vitreous bond.

2. Method according to claim 1, wherein the heating in step (c) is carried out at a temperature between 900 and 1300°C, preferably between 1000 to 1200°C.

3. Method according to any one of claims 1 or 2, wherein the sol-gel alpha alumina grain is a seeded sol-gel alpha alumina.

4. Method according to any one of claims 1 to 3, wherein the coating of the sol-gel alpha alumina abrasive grains comprises cobalt aluminate.

5. Method according to any one of claims 1 to 4, wherein the low temperature-matured vitreous bond is matured at a temperature below 1150°C, preferably below 1000°C.

6. Vitreous bonded abrasive product obtainable by a process according to any one of claims 1 to 5.

## Patentansprüche

1. Verfahren zur Herstellung eines Schleifmittelproduktes mit glasartiger Bindung, umfassend Sol-Gel-alpha-Aluminiumoxid-Schleifkorn, das mit einem keramischen Oxid beschichtet ist, wobei dieses Verfahren die Schritte umfasst:
(a) Formen von Sol-Gel-Aluminiumoxid Schleifkorn, dass alpha-Aluminiumoxid-Kristalle enthält, die eine Größe von zwei Mikrometern oder weniger aufweisen,
(b) Behandeln der Schleifkörner mit einer Lösung oder Dispersion eines Keramikoxid-Precursors, wobei der Keramikoxid-Precursor in der Lösung oder Dispersion in solch einer Menge vorhanden ist, dass das beschichtete Sol-Gel-alpha-Aluminiumoxid-Schleifkom in dem Heizschritt (c) mit bis zu einem Gewichtsprozent, bezogen auf das Gewicht des Schleifkorns, mit einem keramischen Oxid beschichtet wird, und wobei das keramische Oxid ein Metalloxid ist, dass bei Temperaturen oberhalb 1500°C stabil ist, und ausgesucht ist aus der Gruppe bestehend aus Magnesiumoxid, Titanoxid, Cobaltoxid, Nickeloxid, Chromoxid, den entsprechenden Aluminaten dieser Oxide, Mischungen aus einem oder mehrerer dieser Oxide und Aluminaten mit einem alpha-Aluminiumoxid-Precursor sowie Mischungen aus diesen,
(c) Erhitzen der behandelten Körner auf eine Temperatur, die ausreichend ist, um das Lösemittel zu verflüchtigen und den Keramikoxid-Precursor in ein keramisches Oxid umzuwandeln, wodurch Sol-Gel-alpha-Aluminiumoxid-Schleifkörner geformt werden, die mit dem keramischen Oxid beschichtet sind und eine BET-Oberfläche aufweisen, die durch die Keramikoxid-Beschichtung um 10% bis 40% verringert ist, und
(d) Formen eines Schleifartikels mit glasartiger Bindung unter Verwendung des beschichteten Sol-Gel-Aluminiumoxid-Schleifkorns und einer glasartigen Bindung, die bei niedrigen Temperaturen gereift wird.

2. Verfahren gemäß Anspruch 1, wobei der Hitzeschritt (c) bei einer Temperatur zwischen 900 und 1300°C, vorzugsweise zwischen 1000 bis 1200°C durchgeführt wird.

3. Verfahren gemäß einem der Ansprüche 1 oder 2, wobei das Sol-Gel-alpha-Aluminiumoxidkom ein angeimpftes Sol-Gel-alpha-Aluminiumoxidkorn ist.

4. Verfahren gemäß einem der Ansprüche 1 bis 3, wobei die Beschichtung der Sol-Gel-alpha-Aluminiumoxid-Schleifkörner Cobaltaluminat umfasst.

5. Verfahren gemäß einem der Ansprüche 1 bis 4, wobei die bei niedrigen Temperaturen gereifte glasartige Bindung bei einer Temperatur unterhalb 1150°C, vorzugsweise unterhalb von 1000°C gereift wird.

6. Glasartig gebundenes Schleifmittelprodukt, erhältlich nach einem Verfahren gemäß einem der Ansprüche 1 bis 5.

## Revendications

1. Procédé de production d'un produit abrasif aggloméré vitreux, comprenant des grains abrasifs en alpha-alumine sol-gel enrobés d'un oxyde céramique, ledit procédé comprenant les étapes suivantes :
(a) la formation de grains abrasifs en alpha-alumine sol-gel comprenant des cristaux d'alpha-alumine de deux micromètres ou plus petits,
(b) le traitement des grains abrasifs avec une solution ou une dispersion d'un précurseur d'oxyde céramique, ledit précurseur d'oxyde céramique étant présent dans la solution ou la dispersion en une quantité telle que les grains abrasifs en alpha-alumine sol-gel enrobés sont enrobés avec jusqu'à 1 % en poids, par rapport au poids des grains abrasifs, d'un oxyde céramique au cours d'une étape de chauffage (c), et l'oxyde céramique étant un oxyde métallique qui est stable à des températures supérieures à 1 500°C, et qui est choisi dans le groupe consistant en l'oxyde de magnésium, l'oxyde de titane, l'oxyde de cobalt, l'oxyde de nickel, l'oxyde de chrome, les aluminates correspondants à ces oxydes, les mélanges d'un ou plusieurs de ces oxydes et aluminates avec un précurseur d'alpha-alumine, et leurs mélanges,
(c) le chauffage des grains traités à une température suffisante pour extraire le solvant et pour transformer le précurseur d'oxyde céramique en un oxyde céramique, formant ainsi des grains abrasifs en .alpha-alumine sol-gel enrobés par l'oxyde céramique et ayant une surface spécifique BET qui est réduite de 10 à 40 % par l'enrobage d'oxyde céramique, et
(d) la formation d'un article abrasif aggloméré vitreux en utilisant les grains abrasifs en alpha-alumine sol-gel et un liant vitreux mûri à basse température.

2. Procédé selon la revendication 1, dans lequel le chauffage, dans l'étape (c), est mis en oeuvre à une température comprise entre 900 et 1 300°C, de préférence entre 1 000 et 1 200°C.

3. Procédé selon l'une quelconque des revendications 1 ou 2, dans lequel les grains abrasifs en alpha-alumine sol-gel sont faits d'une alpha-alumine sol-gel ensemencée.

4. Procédé selon l'une quelconque des revendications 1 à 3, dans lequel l'enrobage desdits grains abrasifs en alpha-alumine sol-gel comprend de l'aluminate de cobalt.

5. Procédé selon l'une quelconque des revendications 1 à 4, dans lequel le liant vitreux mûri à basse température est mûri à une température inférieure à 1 150°C, de préférence inférieure à 1 000°C.

6. Produit abrasif aggloméré vitreux pouvant être obtenu par un procédé selon l'une quelconque des revendications 1 à 5.
